Europäisches Patentamt

European Patent Office

Office européen des brevets

(11) Veröffentlichungsnummer: **0 535 515 A1**

## (12) EUROPÄISCHE PATENTANMELDUNG

(21) Anmeldenummer: **92116232.7**

(22) Anmeldetag: **23.09.92**

(51) Int. Cl.5: **B01J** 21/20, C08G 65/20

(30) Priorität: **04.10.91 DE 4132895**

(43) Veröffentlichungstag der Anmeldung:
**07.04.93 Patentblatt 93/14**

(84) Benannte Vertragsstaaten:
**DE ES FR GB IT NL**

(71) Anmelder: **BASF Aktiengesellschaft
Carl-Bosch-Strasse 38
W-6700 Ludwigshafen(DE)**

(72) Erfinder: **Mueller, Herbert, Dr.
Carostrasse 53
W-6710 Frankenthal(DE)**

(54) **Verfahren zur Reaktivierung von Montmorillonit-Katalysatoren.**

(57) Verfahren zur Reaktivierung gebrauchter Montmorillonit-Katalysatoren durch eine Hitzebehandlung, indem man die gebrauchten Katalysatoren 0,2 bis 3 Stunden auf Temperaturen von 650 bis 850°C erhitzt und die nach diesem Verfahren erhaltenen Montmorillonit-Katalysatoren.

EP 0 535 515 A1

Die vorliegende Erfindung betrifft ein Verfahren zur Reaktivierung von Montmorillonit-Katalysatoren durch eine Hitzebehandlung sowie die nach diesem Verfahren erhaltenen Montmorillonit-Katalysatoren.

Montmorillonite sind eine natürlich vorkommende Klasse von Tonmineralien, denen im Idealfall die Formel $Al_2O_3$ x $4SiO_2$ x $H_2O$ + $nH_2O$ (Kristallwasser) zukommt. Das mit starken Säuren vorbehandelte Mineral wird z.B. als Bleicherde oder als saurer Katalysator für Reaktionen eingesetzt, die sonst mit Protonsäuren, wie Schwefelsäure, Salzsäure, Phosphorsäure oder Perchlorsäure oder mit Lewis-Säuren, wie Metallhalogeniden, beispielsweise Eisen-, Zink-, Zinn- und Aluminiumhalogeniden, katalysiert werden. Beispielhaft für solche Umsetzungen seien die Polymerisation von Tetrahydrofuran (THF) zu Polytetrahydrofuran (PTHF) (s. US-A 4 243 799) oder die Copolymerisation von THF mit Alkylenoxiden zu THF-Alkylenoxid-Copolymeren, die Depolymerisation von PTHF (s. EP-A 52 213) oder die Veresterung von Carbonsäuren mit Alkoholen, zur Herstellung von u.a. Lösungsmitteln. Vor ihrer Verwendung als Katalysatoren werden die natürlich vorkommenden Montmorillonite aufbereitet und aktiviert, beispielsweise nach den Verfahren von Ullmanns Encyklopädie der Techn. Chemie, 3. Auflage, 4. Band, Seite 541-545, Urban und Schwarzenbeck, München 1953 oder US-A 4 235 751.

Montmorillonite, die aufgrund ihrer Bleichwirkung oftmals auch als Bleicherden bezeichnet werden, werden industriell im allgemeinen nach 2 Verfahren eingesetzt. Im Perkolationsverfahren durchströmt das umzusetzende Reaktionsgut den in einem Festbett angeordneten Montmorillonit-Katalysator, im Suspensionsverfahren hingegen wird der Katalysator in der Reaktionsmischung suspendiert und nach beendeter Umsetzung in der Regel mechanisch von dieser abgetrennt, beispielsweise durch Zentrifugation oder Filtration.

Unabhängig davon nach welchem der obengenannten Verfahren und zu welchem der obengenannten Zwecke die Bleicherde-Katalysatoren eingesetzt werden, haben diese Katalysatoren nur eine begrenzte Lebensdauer, d.h. ihre katalytische Aktivität und Selektivität nimmt im Laufe der Zeit so stark ab, daß sie aus wirtschaftlichen als auch aus produktspezifischen Gründen - insbesondere aus Gründen die die Reinheit der gebildeten Produkte betreffen - durch frische Katalysatorchargen ersetzt werden müssen. Es besteht daher ein wirtschaftliches Interesse an der Reaktivierung derart desaktivierter Montmorillonit-Katalysatoren.

Die Desaktivierung der Montmorillonit-Katalysatoren rührt vermutlich von der Adsorption organischer Substanzen aus dem Reaktionsgut her, welche die katalytisch aktiven Zentren der Montmorillonite blockieren oder durch ihre Anwesenheit die Reaktionsspezifität dieser Zentren verändern. Die Reaktivierung der Montmorillonite könnte deshalb durch die Zerstörung oder Herauslösung dieser adsorbierten Katalysatorgifte erfolgen. Es wurde daher immer wieder versucht, die Bleicherde-Katalysatoren durch Abbrennen der adsorbierten Katalysatorgifte zu reaktivieren. Die Methode des Abbrennens führte jedoch immer zu hohen Verlusten an Bleichkraft und Katalysatoraktivität der so behandelten Montmorillonit-Katalysatoren.

In einer systematisch angelegten Arbeit von Schultze (Angew. Chem. 49, 74 (1936)) wird gezeigt, daß bereits bei der sogenannten Knicktemperatur von 120 bis 150°C die Aktivität der Bleicherden beeinträchtigt werden kann. Beim Glühen der Bleicherden wird deren Kristallstruktur und damit deren katalytische Aktivität bereits bei Temperaturen von 300 bis 400°C zerstört (s. Ullmann, 3. Auflage, Band 4, Seite 544 unten). Eine restlose Verbrennung der adsorbierten Stoffe erschien daher nicht möglich. Da bei den besten nach dieser Methode arbeitenden Reaktivierungsverfahren nur 50 bis höchsten 75 % der ursprünglichen Katalysatoraktivität wiedergewonnen werden können, hat diese Art der Regenerierung keine technische Bedeutung erlangt.

Auf die thermische Labilität der aktivierten Bleicherden wird auch in US-A 4 235 751 hingewiesen. Dieses Patent offenbart ein Verfahren zur Herstellung von Montmorillonit-Katalysatoren aus rohen Montmorilloniten durch eine spezielle Lösungsmittelbehandlung und Aktivierung mit einer organischen Säure. Nach der Säureaktivierung soll der Montmorillonit-Katalysator bei Temperaturen unterhalb 150°C getrocknet werden, damit seine Aktivität erhalten bleibt.

Somit stand bislang kein Verfahren zur Verfügung, das die möglichst vollständige Wiederherstellung der katalytischen Aktivität und Selektivität desaktivierter Montmorillonit-Katalysatoren auf wirtschaftlich zufriedenstellende Weise ermöglicht. Aufgabe der vorliegenden Erfindung war es, ein solches Verfahren zu finden.

Dementsprechend wurde ein Verfahren zur Reaktivierung gebrauchter Montmorillonit-Katalysatoren durch eine Hitzebehandlung gefunden, das dadurch gekennzeichnet ist, daß man die gebrauchten Katalysatoren 0,2 bis 3 Stunden auf Temperaturen von 650 bis 850°C erhitzt.

Des weiteren betrifft die vorliegende Erfindung Montmorillonit-Katalysatoren, die nach ihrer Verwendung als Katalysatoren zur Polymerisation von Tetrahydrofuran zu Polytetrahydrofuran, zur Copolymerisation von Tetrahydrofuran mit Alkylenoxiden oder zur Depolymerisation von Polytetrahydrofuran oder Polytetrahydrofuran-Alkylenoxid-Copolymeren einer 0,5- bis 2-stündigen Hitzebehandlung bei Temperaturen von 720 bis 820°C unterzogen worden sind.

Erfindungsgemäß werden die zu reaktivierenden Montmorillonit-Katalysatoren 0,2 bis 3, vorzugsweise 0,5 bis 2 Stunden, bei Temperaturen von 650 bis 850°C, vorzugsweise bei Temperaturen von 700 bis 820°C und insbesondere bei Temperaturen von 720 bis 820°C, thermisch behandelt. Diese Hitzebehandlung kann sowohl in Anwesenheit von Luft als auch unter Intertgasen, wie Argon, vorgenommen werden. Die Hitzereaktivierung der Montmorillonite kann diskontinuierlich z.B. in Hordenöfen oder kontinuierlich z.B. in Drehrohröfen, erfolgen. Die Art der verwendeten Öfen ist in der Regel für den Erfolg des erfindungsgemäßen Verfahrens nicht kritisch. Eine erneute Säureaktivierung der hitzeregenerierten Montmorillonit-Katalysatoren ist in der Regel nicht erforderlich.

Als Einsatzstoffe zur erfindungsgemäßen Reaktivierung können praktisch alle Montmorillonite verwendet werden, die in ihrer Wirkung als Bleicherden oder als Katalysatoren, beispielsweise zur Polymerisation oder Depolymerisation von THF bzw. PTHF nachgelassen haben, beispielsweise Montmorillonit-Katalysatoren, wie sie in US-A 4 243 799, US-A 4 235 751 und in Ullmanns Encyklopädie der Technischen Chemie, 3. Auflage, 4. Band, Seite 541 bis 545, Urban und Schwarzenberg, München 1953 genannt werden. Der Zeitpunkt wann eine derartige Reaktivierung vorgenommen werden sollte, ist je nach dem Verfahren, in dem der Montmorillonit-Katalysator bzw. die -Bleicherde, eingesetzt worden ist, unterschiedlich und richtet sich in der Regel nach wirtschaftlichen Gesichtspunkten, wie abnehmenden Raum-Zeit-Ausbeuten oder verschlechterten Produktqualitäten. Besonders gute Ergebnisse werden im erfindungsgemäßen Verfahren bei der Reaktivierung solcher Montmorillonit-Katalysatoren erzielt, die zuvor zur Polymerisation von THF zu PTHF oder zur Copolymerisation von THF mit Alkylenoxiden, insbesondere $C_2$- bis $C_4$-Alkylenoxiden, zu THF-Alkylenoxid-Copolymeren sowie zur Depolymerisation von PTHF und PTHF-Alkylenoxid-Copolymeren benutzt wurden.

Mit dem erfindungsgemäßen Verfahren können desaktivierte Montmorillonit-Katalysatoren beliebig oft reaktiviert werden, so daß die Kosten der ansonsten erforderlichen, umweltverträglichen Entsorgung und Deponierung der verbrauchten Katalysatoren eingespart werden können.

Überraschenderweise gelingt mit dem erfindungsgemäßen Reaktivierungsverfahren nicht nur die vollständige Wiederherstellung der ursprünglichen Aktivität und Selektivität des Katalysators, die erfindungsgemäß reaktivierten Katalysatoren übertreffen die ursprünglich eingesetzten, frischen Katalysatoren in ihrer Aktivität und Selektivität bis um das 1,3-fache.

Aktivitäts- und Selektivitätssteigerungen der erfindungsgemäß reaktivierten Montmorillonit-Katalysatoren können z.B. bei der Polymerisation von THF zu PTHF, sowie bei der Copolymerisation von THF mit Alkylenoxiden, bei der Depolymerisation von PTHF und bei der Veresterung von Carbonsäuren mit Alkoholen beobachtet werden.

Bei der Polymerisation von THF wird eine höhere Aktivität des regenerierten Katalysators im Vergleich zum ursprünglichen, frisch eingesetzten Katalysator gemessen. Des weiteren erhält man bei Verwendung des regenerierten Katalysators ein PTHF-Produkt mit einer sehr engen Molekulargewichtsverteilung $M_w/M_n$ von 1,3, d.h. die Selektivität der regenerierten Katalysatoren ist im Vergleich zum ursprünglich eingesetzten deutlich verbessert. Die Farbzahl des mit Hilfe der reaktivierten Montmorillonit-Katalysatoren hergestellten PTHF's ist so niedrig, daß auf eine Vorbehandlung des zur Polymerisation eingesetzten THF's, wie sie in EP-A 61 668 und US-A 4 243 799 beschrieben ist, verzichtet werden kann.

Bei der Copolymerisation von THF mit Ethylenoxid wird bei Verwendung der erfindungsgemäß regenerierten Montmorillonit-Katalysatoren der Anfall an unerwünschten, cyclischen, oligomeren Ethern deutlich vermindert und bei der Veresterung von Carbonsäuren mit Alkoholen wird außer einer Steigerung der Reaktionsgeschwindigkeit bei Anwendung der reaktivierten Montmorillonite auch eine Abnahme der Olefinbildung aus den Alkoholen beobachtet.

Diese vorteilhaften Effekte der reaktivierten Montmorillonite sind am ausgeprägtesten, wenn ein reaktivierter Montmorillonit verwendet wird, der während einer Zeitspanne von 0,5 bis 2 Stunden bei einer Temperatur von 700 bis 820°C, insbesondere von 720 bis 820°C hitzebehandelt wurde und der vor seiner Reaktivierung als Katalysator zur Polymerisation von THF zu PTHF, zur Copolymerisation von THF mit Alkylenoxiden, insbesondere mit $C_2$- bis $C_4$-Alkylenoxiden oder zur Depolymerisation von PTHF oder PTHF-Alkylenoxid-Copolymeren verwendet wurde.

Interessanterweise werden die genannten Aktivitäts- und Selektivitätssteigerungen nur bei der erfindungsgemäßen Reaktivierung gebrauchter Montmorillonite erzielt, nicht jedoch bei einer entsprechenden Behandlung frischer, handelsüblicher Montmorillonit-Katalysatoren. Wird die erfindungsgemäße Hitzebehandlung auf ungebrauchte Montmorillonit-Katalysatoren angewandt, so wird bestenfalls nur eine geringfügige Verbesserung von deren Eigenschaften beobachtet, in der Regel verschlechtert sich jedoch deren Aktivität erwartungsgemäß der Lehre der eingangs zitierten Literatur.

Mit den erfindungsgemäß reaktivierten Montmorillonit-Katalysatoren kann die Polymerisation von THF zu PTHF (USA 4 243 799, EP-A 61 668), die Copolymerisation von THF mit Alkylenoxiden (EP-A 104 609), die Depolymerisation von PTHF (EP-A 52 213) sowie die Veresterung von Carbonsäuren (DE-A 12 11 643) nach den bekannten, herkömmlichen Methoden durchgeführt werden.

Beispiele

Die Molekulargewichtsverteilung ist durch den Quotienten aus dem Gewichtsmittel des Molekulargewichts ($M_w$) und dem Zahlenmittel des Molekulargewichts ($M_n$) $M_w/M_n$ definiert. Die Molmassen der erhaltenen THF-Polymeren wurden mittels Gelpermeationchromatographie bestimmt. Aus den erhaltenen Chromatogrammen wurde das Zahlenmittel $M_n$ nach der Gleichung

$$M_n = \frac{\Sigma\, c_i}{\dfrac{\Sigma\, c_i}{M_i}}$$

berechnet, in der $c_i$ für die Konzentration der einzelnen Polymerspezies i im erhaltenen Polymerengemisch steht und in der $M_i$ das Molekulargewicht der einzelnen Polymerspezies i bedeutet.

Das Gewichtsmittel $M_w$ wurde aus den erhaltenen Chromatogrammen mit Hilfe der Formel

$$M_w = \frac{c_i\, M_i}{\Sigma\, c_i}$$

bestimmt.

Bei den einzelnen Versuchen wurden die folgenden Katalysatoren verwendet:

Katalysator 0: Montmorillonit-Katalysator K 306 der Firma Süd-Chemie, München, der vor seiner Verwendung bei 150°C bis zur Gewichtskonstanz getrocknet wurde.

Katalysator 1

Katalysator 0, der nach der Trocknung bei 150°C noch eine Stunde bei 750°C in Drehrohrofen behandelt wurde.

Katalysator 2

Katalysator 0, der zuvor 4 Jahre lang als Katalysator zur kontinuierlichen Polymerisation von THF in Gegenwart von Essigsäureanhydrid diente und dessen Aktivität nach dieser Zeit nur noch 60 % der ursprünglichen betrug. Dieser Katalysator wurde mit Wasser und Methanol gewaschen und anschließend bei 150°C zur Gewichtskonstanz getrocknet.

Katalysator 3 (erfindungsgemäß)

Der getrocknete Katalysator 2 wurde zusätzlich noch 2 Stunden im Drehrohrofen auf 750°C an der Luft erhitzt.

Katalysator 4

Der getrocknete Katalysator 2 wurde zusätzlich noch 2 Stunden im Drehrohrofen auf 550°C erhitzt.

Katalysator 5

Der getrocknete Katalysator 2 wurde zusätzlich noch 2 Stunden im Drehrohrofen auf 850°C erhitzt.

Beispiel 1
Polymerisation von THF

In einer Umlaufapparatur wurde eine Mischung aus 91 Gew.-% THF und 9 Gew.-% Essigsäureanhydrid bei einer Temperatur von 50°C in Rieselfahrweise über 250 ml des in einem Festbett angeordneten Montmorillonit-Katalysators geleitet und dabei polymerisiert. Die Polymerisation wurde in einer Argonatmosphäre durchgeführt. Die Umlaufgeschwindigkeit des Reaktionsgutes wurde so gewählt, das bei 8 Stunden Gesamtreaktionszeit die mittlere Verweilzeit einer Volumeneinheit der Reaktionsmischung am Katalysator ca. 3 Stunden betrug. Danach wurde die Reaktionsmischung abgelassen und analysiert. Die Ergebnisse der Umsetzung sind in Tabelle 1 aufgeführt.

Der Grad der Umsetzung wurde durch die Bestimmung des umgesetzten Essigsäureanhydrids ermittelt. Dazu wurde der Gehalt an nicht umgesetztem Essigsäureanhydrid gaschromatographisch bestimmt. Der PTHF-Gehalt der Reaktionsmischung wurde gravimetrisch nach Entfernung der flüchtigen Bestandteile der Reaktionsmischung bestimmt. Die Bestimmung der Farbzahl APHA erfolgte nach DIN/ISO 6271.

Tabelle 1

| THF-Polymerisation | | | | |
|---|---|---|---|---|
| Katalys.-Nr. | Gew.-% PTHF im Austrag | Mol.-% *) umgesetztes Essigsäureanhydrid | Farbzahl APHA | $M_w/M_n$ |
| 0 | 50 | 85 | 30 | 1,6 |
| 1 | 55 | 87 | 30 | 1,4 |
| 2 | 38 | 60 | 60 | 1,9 |
| 3 | 59 | 99 | 5 | 1.3 |
| 4 | 55 | 94 | 10 | 1,4 |
| 5 | 54 | 92 | 15 | 1,5 |

*) 100 Mol.-% bedeuten vollständige Reaktion nach 3 Stunden Verweilzeit. Betrachtet man Mol.-% Essigsäureanhydridumsatz als Maß für die Reaktivität, dann ist der Katalysator 3 etwa 1,2 mal so aktiv wie der Katalysator O.

Beispiel 2

Veresterung von Carbonsäuren

Eine 1:1 molare Mischung von Essigsäure und n-Butanol wurde bei 85°C über die Umlaufapparatur von Beispiel 1 geleitet. Die Reaktionstemperatur von 85°C war gewählt worden, damit das Veresterungsgleichgewicht bei der mittleren Verweilzeit der Reaktionsmischung am Katalysator von 3 Stunden, nicht erreicht wurde. Zur Charakterisierung der Katalysatoraktivität wurde der Umsetzungsgrad, der durch die bei der Veresterung entstandene Wassermenge bei gleicher Temperatur und Reaktionszeit definiert ist, bestimmt. Die Bestimmung des gebildeten Reaktionswassers erfolgte nach der Karl-Fischer-Methode. Die Ergebnisse der Veresterungsversuche sind in Tabelle 2 aufgeführt.

Tabelle 2

| Veresterung von Essigsäure mit n-Butanol | | | | | | |
|---|---|---|---|---|---|---|
| Katalys. Nr. | 0 | 1 | 2 | 3 | 4 | 5 |
| Gew.-% $H_2O$ im Gemisch | 2,9 | 3,0 | 1,9 | 4,1 | 3,2 | 2,9 |

Beispiel 3

Depolymerisation von PTHF

PTHF des mittleren Molekulargewichts 1000 wurde mit 10 Gew.-% Katalysator versetzt und 1 Stunde unter Luftausschluß auf 140°C erhitzt. Danach wurde die abgespaltene Menge THF, nach Entfernung des THF's durch Verdampfung, gravimetrisch bestimmt. Die Ergebnisse sind in Tabelle 3 aufgelistet.

Tabelle 3

| Katalys. Nr. | 0 | 1 | 2 | 3 | 4 | 5 |
|---|---|---|---|---|---|---|
| Gew.-% abgespaltenes THF | 15 | 13 | 5 | 35 | 29 | 28 |

**Patentansprüche**

1. Verfahren zur Reaktivierung gebrauchter Montmorillonit-Katalysatoren durch eine Hitzebehandlung, dadurch gekennzeichnet, daß man die gebrauchten Katalysatoren 0,2 bis 3 Stunden auf Temperaturen von 650 bis 850°C erhitzt.

2. Verfahren nach Anspruch 1, dadurch gekennzeichnet, daß man gebrauchte Montmorillonit-Katalaysatoren reaktiviert, die zuvor bei der Polymerisation von Tetrahydrofuran zu Polytetrahydrofuran, zur Copolymerisation von Tetrahydrofuran mit Alkylenoxiden oder zur Depolymerisation von Polytetrahydrofuran oder Polytetrahydrofuran-Alkylenoxid-Copolymeren verwendet wurden.

3. Montmorillonit-Katalysatoren, die dadurch erhalten worden sind, daß sie nach ihrer Verwendung als Katalysatoren zur Polymerisation von Tetrahydrofuran zu Polytetrahydrofuran, zur Copolymerisation von Tetrahydrofuran mit Alkylenoxiden oder zur Depolymerisation von Polytetrahydrofuran oder Polytetrahydrofuran-Alkylenoxid-Copolymeren einer 0,5- bis 2-stündigen Hitzebehandlung bei Temperaturen von 700 bis 820°C unterzogen worden sind.

4. Verfahren zur Herstellung von Polytetrahydrofuran durch die Montmorillenit-katalysierte Polymerisation von Tetrahydrofuran, dadurch gekennzeichnet, daß man Montmorillonit-Katalysatoren verwendet, die dadurch erhalten worden sind, daß sie nach ihrer Verwendung als Katalysatoren zur Polymerisation von Tetrahydrofuran zu Polytetrahydrofuran, zur Copolymerisation von Tetrahydrofuran mit Alkylenoxiden oder zur Depolymerisation von Polytetrahydrofuran oder Polytetrahydrofuran-Alkylenoxid-Copolymeren einer 0,5- bis 2-stündigen Hitzebehandlung bei Temperaturen von 700 bis 820°C unterzogen worden sind.

Europäisches
Patentamt

**EUROPÄISCHER RECHERCHENBERICHT**

Nummer der Anmeldung

EP  92 11 6232

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-2 631 123  (KAULAKIS) <br> * Spalte 1, Zeilen 5-17; Spalte 3, Zeilen 28-67 * <br> --- | 1 | B 01 J  21/20 <br> C 08 G  65/20 |
| A | US-A-4 471 063  (HETTINGER) <br> * Spalte 5, Zeilen 39-65 * <br> --- | 1 | |
| A | US-A-2 765 282  (ELLIOTT) <br> * Spalte 1, Zeilen 21-72; Spalte 2, Zeilen 1-7 * <br> --- | 1 | |
| A | US-A-4 329 445  (DEL PESCO) <br> * Spalte 4, Zeilen 26-51 * <br> ----- | 1-4 | |

RECHERCHIERTE SACHGEBIETE (Int. Cl.5)

B 01 J
C 08 G

Der vorliegende Recherchenbericht wurde für alle Patentansprüche erstellt

| Recherchenort | Abschlußdatum der Recherche | Prüfer |
|---|---|---|
| DEN HAAG | 14-01-1993 | KERRES P M G |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
  Dokument